# EUROPÄISCHE PATENTSCHRIFT

(11) **EP 2 634 460 B1**
(45) Veröffentlichungstag und Bekanntmachung des Hinweises auf die Patenterteilung: **01.04.2015**
(21) Anmeldenummer: 13000507.7
(22) Anmeldetag: 01.02.2013
(51) Int. Cl.: F16J 15/24, F16J 15/44, F16J 15/46

(54) **Schiff mit einer Schottabdichtung im Bereich von Wellendurchführungen**
Ship with a bulkhead seal in the area of shaft feedthroughs
Bateau doté d'une étanchéification de cloison dans la zone des passages d'arbre

(30) Priorität: 29.02.2012 DE 102012004443
(43) Veröffentlichungstag der Anmeldung: 04.09.2013
(73) Patentinhaber: SKF Blohm + Voss Industries GmbH, 20457 Hamburg (DE)
(72) Erfinder: Brand, Jörg, 22946 Trittau (DE)
(74) Vertreter: Marschall, Stefan

(56) Entgegenhaltungen:
- EP-A1- 0 079 480
- DE-A1-102008 037 746
- GB-A- 2 140 880
- US-A- 4 114 058

## Beschreibung

Die Erfindung bezieht sich auf ein Schiff mit einer Schottabdichtung gemäß dem Oberbegriff des Anspruchs 1 und wie es aus dem Dokument GB 2140880 A bekannt ist. Ausbildungen dieser Art sind in vielfältigen Ausgestaltungen zur Abdichtung von Schotten mit aufgenommenen Wellen bekannt. Hierbei besteht der Mangel, dass durch die Anlage an der Welle ein Verschleiß auftritt und trotz der Einstellbarkeit der Dichtringe teilweise auftretende radiale Wellenverlagerungen nur bedingt beherrschbar sind. Zusätzlich ist eine geräuschlose Anordnung nicht durchführbar, wobei auch Geräusche in die Schiffsstruktur eingeleitet werden und auch eine Wärmeentwicklung auftritt.

Die Aufgabe der Erfindung ist es, durch eine einfache Ausbildung die Nachteile der bisherigen Anordnungen auszuschalten und die Abdichtung im Bedarfsfall bei Wasserdetektion und Ausfall der Energieversorgung zu aktivieren und dadurch große Standzeiten ohne Beeinträchtigungen zu gewährleisten.

Die Lösung dieser Aufgabe erfolgt erfindungsgemäß dadurch, dass radial zur Welle wirkende Verstelleinrichtungen den einzelnen Segmenten der Dichtringe im Gehäuse zugeordnet sind, wobei jede Verstelleinrichtung durch eine zwischen den Dichtringen nach außen geführte Kolbenstange aufweist, die am Ende ein Mitnehmerelement trägt, das in zugeordnete Aufnahmen der Segmente der Dichtringe zum Anheben eingreift und oberhalb der Dichtringe eine Kolbenkammer mit einem verstellbaren Kolben am Ende der Kolbenstange angeordnet ist und über ein steuerbares Druckmedium der Kolben in eine Endstellung der Kolbenkammer zum Anheben der Segmente der Dichtringe im Abstand zur Welle gegen die Kraft einer oberhalb des Kolbens zugeordneten Druckfeder und der Ringfedern der Druckringe einstellbar ist und im drucklosen Zustand der Kolben über die Druckfeder nach unten verstellbar ist und die Ringfedern die Segmente der Dichtringe über den Druckring zur dichtenden Anlage an die Welle anlegbar sind.

Hierdurch wird im Normalbetrieb eine reibungslose Abdichtung ohne Verschleiß mit geräuschlosem Lauf ohne Übertragung von der Welle in die Schiffsstruktur ermöglicht und es treten auch keine Berührungen bei radialen Wellenverlagerungen auf. Zusätzlich ist kein Limit für Wellendrehzahlen gegeben.

Eine vorteilhafte Ausbildung besteht darin, dass die Kolbenkammer im Normalbetrieb durch das zugeführte Druckmedium über eine Steuereinheit zur Entkopplung der Dichtung durch Anheben der Dichtringe beaufschlagbar ist und bei auftretenden Störungen eine Aktivierung der Dichtringe zur Dichtung durch Druckentlastung der Kolbenkammer selbsttätig einstellbar ist.

Ferner wird vorgeschlagen, dass das Druckmedium durch Druckluft gebildet ist.

In Ausgestaltung der Erfindung ist vorgesehen, dass die Dichtringe zur Aufnahme korrespondierender Vorsprünge des zugeordneten Druckringes Führungsnuten aufweisen.

Eine vorteilhafte Ausgestaltung besteht darin, dass jeder Dichtring aus sechs Segmenten gebildet ist.

In der Zeichnung ist ein Ausführungsbeispiel der Erfindung schematisch dargestellt. Es zeigen:

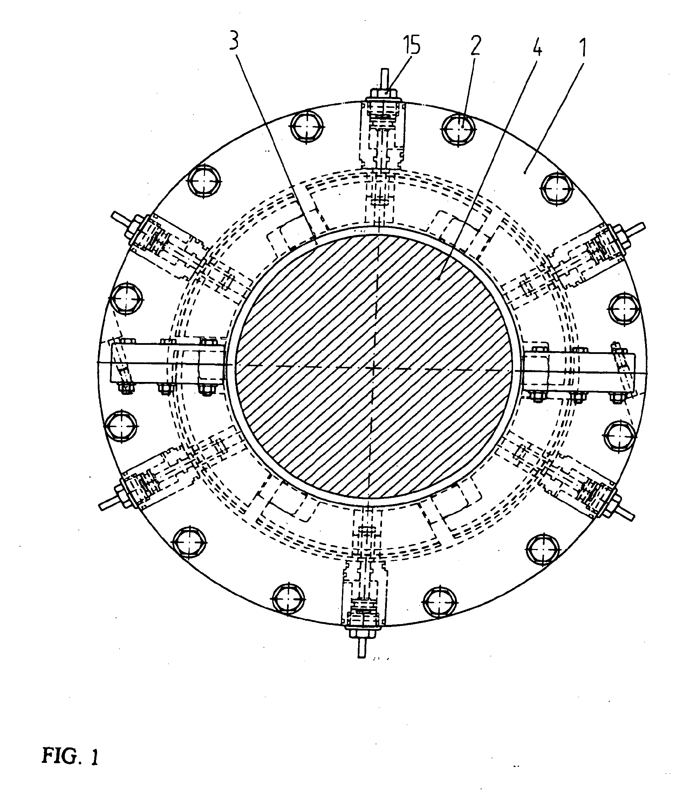

- Fig. 1: eine Draufsicht auf eine am Schott befestigte Gesamtanordnung mit seinem Gehäuse mit einer Abdichtung sowie einer aufgenommenen Welle,

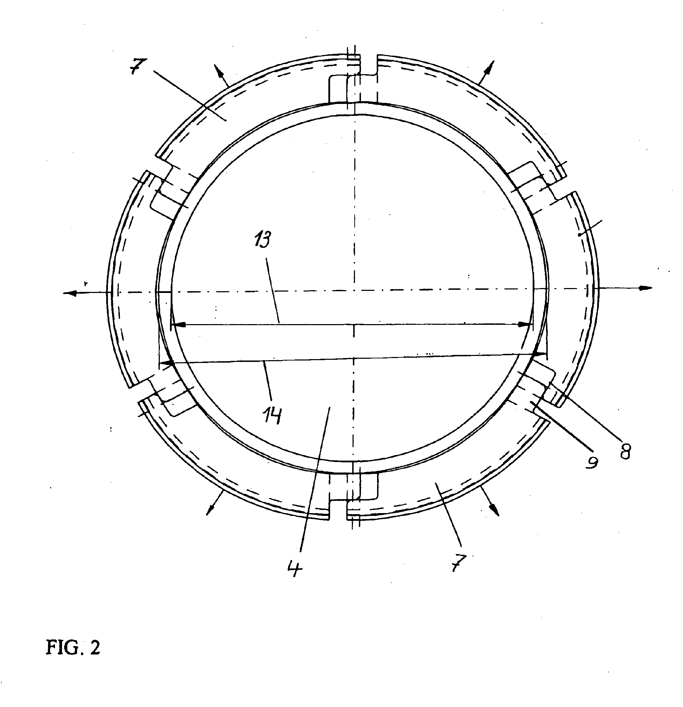

- Fig. 2: eine Prinzipdarstellung der verstellbaren Dichtringe mit aufgenommer Welle und

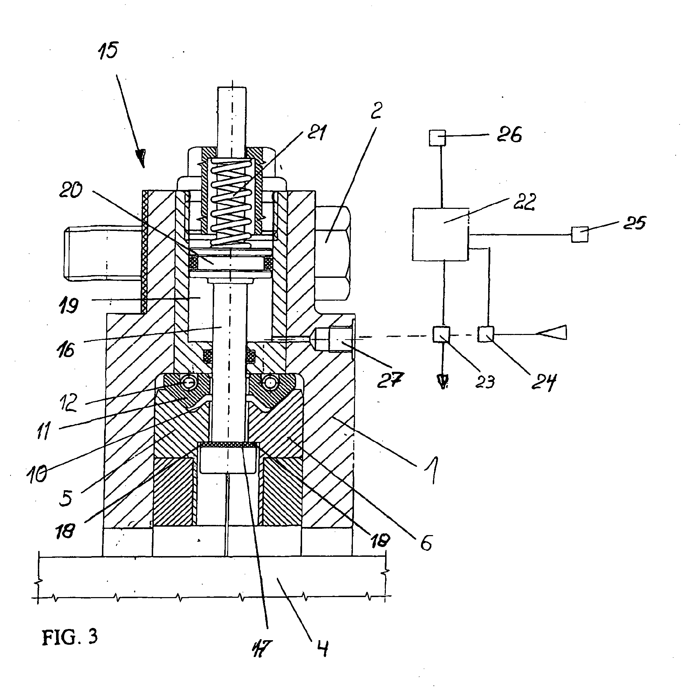

- Fig. 3: einen vergrößerten Schnitt durch eine Verstelleinheit mit zugeordneten Steuerelementen.

Bei der dargestellten Anordnung ist ein zweiteiliges Gehäuse 1 an einer nicht näher dargestellten Schottwand eines Schiffes über Schrauben 2 befestigt. Das Gehäuse 1 besitzt eine Durchtrittsöffnung 3 zur Aufnahme einer Welle 4.

Der Welle 4 sind im Gehäuse 1 einstellbare parallele Dichtringe 5, 6 aus einzelnen Segmenten 7 zugeordnet, die über Verzapfungen aus korrespondierenden Aufnahmen 8 und Führungselementen 9 in ihrem Durchmesser sternförmige zur Anlage und Abdichtung zur Welle 4 verstellbar sind. Dabei sind im Mantelbereich der Dichtringe 5, 6 Führungsnuten 10 zur Aufnahme eines ebenfalls segmentierten Druckringes 11 angeordnet, der über aufgenommene Ringfedern 12 als Zugfedern die Dichtringe 5, 6 zur Anlage an die Welle 4 presst.

Zur Bildung eines Abstandes zwischen einem Durchmesser 13 der Welle 4 und dem Durchmesser 14 der Dichtringe 5, 6 ist jedem Segment 7 der parallel zugeordneten Dichtringe 5, 6 eine Verstellvorrichtung 15 zugeordnet, die radial zur Welle 4 auf die Segmente 7 der Dichtringe 5, 6 einwirkt. Hierbei ist eine zwischen den Dichtringen 5, 6 nach außen geführte Kolbenstange 16 angeordnet, die über ein Mitnehmerelement 17 im Bereich der Dichtringe 5, 6 in zugeordnete Aufnahmen 18 der Segmente 7 beiderseits zum Anheben eingreift, wobei die Kolbenstange 16 oberhalb der Dichtringe 5, 6 in einer Kolbenkammer 19 mit einem verstellbaren Kolben 20 verbunden ist. Oberhalb des Kolbens 20 ist eine Druckfeder 21 angeordnet, die im drucklosen Zustand der Kolbenkammer 19 den Kolben 20 in Richtung der Welle 4 führt. Bei einer Beaufschlagung der Kolbenkammer 19 mit einem Druckmedium wird hierbei die Welle 4 durch die Dichtringe 5, 6 nicht abdichtend beaufschlagt und ist im Abstand zur Welle angeordnet.

Die Kolbenkammer 19 wird in diesem Ausführungsbeispiel über einen Anschluss 27 mit Druckluft beaufschlagt, wobei die Ansteuerung über eine Steuereinheit 22 erfolgt, die entsprechende Ventile 23, 24 steuert. Die Steuereinheit 22 wird dabei zusätzlich von einem Sensor 25 gesteuert, der bei Wasserdetektion die Druckluftzufuhr über das Ventil 24 unterbricht und über das Ventil 23 die Entlüftung der Kolbenkammer 19 herbeiführt. Zusätzlich wird bei einem Energieausfall ebenfalls über die Steuereinheit 22 und einen Energiewächter 26 die Entlüftung der Steuerkammer 19 herbeigeführt.

Bei einer drucklosen Kolbenkammer 19 und einem damit verbundenen Störfall, werden durch Freigabe der einzelnen Segmente 7 über den Kolben 20 durch die Ringfedern 12 mit der Kolbenstange 16 und seinem Mitnehmerelement 17 die Dichtringe 5, 6 in eine Dichtposition auf die Welle 4 angelegt.

## Patentansprüche

1. Schiff mit einer Schottabdichtung im Bereich von Wellendurchführungen durch einstellbare parallel zugeordnete Dichtringe aus korrespondierenden Segmenten, die jeweils über Verzapfungen verstellbar zugeordnet sind und zur sternförmigen Verstellung und Anlage auf der Welle durch einen einstellbaren segmentierten Druckring auf die Segmente der Dichtringe einwirken sowie über aufgenommene Ringfedern als Zugfedern die Dichtringe an die aufgenommene Welle pressen, wobei die Dichtringe und Druckringe in einem mit einer Schottwandung verbundenen Gehäuse angeordnet sind, **dadurch** gekennzeichnet, **dass** radial zur Welle (4) wirkende Verstelleinrichtungen (15) den einzelnen Segmenten (7) der Dichtringe im Gehäuse zugeordnet sind, wobei jede Verstelleinrichtung (15) durch eine zwischen den Dichtringen (5, 6) nach außen geführte Kolbenstange (16) aufweist, die am Ende ein Mitnehmerelement (17) trägt, das in zugeordnete Aufnahmen (18) der Segmente (7) der Dichtringe (5, 6) zum Anheben eingreift und oberhalb der Dichtringe (5, 6) eine Kolbenkammer (19) mit einem verstellbaren Kolben (20) am Ende der Kolbenstange (16) angeordnet ist und über ein steuerbares Druckmedium der Kolben (20) in eine Endstellung der Kolbenkammer (19) zum Anheben der Segmente (7) der Dichtringe (5, 6) im Abstand zur Welle (4) gegen die Kraft einer oberhalb des Kolbens (20) zugeordneten Druckfeder (21) und der Ringfedern (12) der Druckringe (11) einstellbar ist und im drucklosen Zustand der Kolben (20) über die Druckfeder (21) nach unten verstellbar ist und die Ringfedern (12) die Segmente (7) der Dichtringe (5, 6) über den Druckring (11) zur dichtenden Anlage an die Welle (4) anlegbar sind.

2. Schiff nach Anspruch 1, **dadurch gekennzeichnet, dass** die Kolbenkammer (19) im Normalbetrieb durch das zugeführtes Druckmedium über eine Steuereinheit (22) zur Entkopplung der Dichtung durch Anheben der Dichtringe (5, 6) beaufschlagbar ist und bei auftretenden Störungen eine Aktivierung der Dichtringe (5, 6) zur Dichtung durch Druckentlastung der Kolbenkammer (19) selbsttätig einstellbar ist.

3. Schiff nach Anspruch 1 oder 2, **dadurch** gekennzeichnet, **dass** das Druckmedium durch Druckluft gebildet ist.

4. Schiff nach einem der Ansprüche 1 bis 3, **dadurch gekennzeichnet, dass** die Dichtringe (5, 6) zur Aufnahme korrespondierender Vorsprünge des zugeordneten Druckringes (11) Führungsnuten (10) aufweisen.

5. Schiff nach einem der Ansprüche 1 bis 4, **dadurch gekennzeichnet, dass** jeder Dichtring (5, 6) aus sechs Segmenten (7) gebildet ist.

## Claims

1. A ship with a bulkhead seal in the region of shaft feed-throughs by the use of adjustable sealing rings of corresponding segments that are aligned in parallel, which in each case are adjustably aligned by means of interlocking joints, and which, for purposes of radial adjustment and seating on the shaft act by means of an adjustable segmented compression ring on the segments of the sealing rings, and, via housed annular springs acting as tension springs, press the sealing rings against the housed shaft, wherein
the sealing rings and compression rings are arranged in a housing connected with a bulkhead wall,
**characterised in that**,
adjustment devices (15) acting radially relative to the shaft (4) are assigned to the individual segments (7) of the sealing rings in the housing, wherein
each adjustment device (15) has a piston rod guided outwards between the sealing rings (5, 6), which piston rod (16) at one end carries a follower element (17), which engages in assigned seatings (18) of the segments (7) of the sealing rings (5, 6) for purposes of raising the latter, and above the sealing rings (5, 6) a piston chamber (19) is arranged with an adjustable piston (20) at the end of the piston rod (16), and by means of a controllable pressure medium the piston (20) can be adjusted into one end position of the piston chamber (19) for purposes of raising the segments (7) of the sealing rings (5, 6) at a distance from the shaft (4) against the force of a compression spring (21) assigned above the piston (20) and the ring springs (12) of the compression rings (11), and in the unpressurised state the piston (20) can be adjusted downwards by means of the compression spring (21), and the ring springs (12) can be applied via the compression ring (11) onto the segments (7) of the sealing rings (5, 6) to provide a sealing seating onto the shaft (4).

2. The ship in accordance with Claim 1,
**characterised in that**,
in normal operation pressure can be applied to the piston chamber (19) by means of the supplied pressure medium via a control unit (22) for purposes of decoupling the seal by raising the sealing rings (5, 6), and in the event of faults occurring an activation of the sealing rings (5, 6) can be automatically adjusted for sealing purposes by depressurising the piston chamber (19).

3. The ship in accordance with Claim 1 or 2,
**characterised in that**,
the pressure medium is formed by compressed air.

4. The ship in accordance with one of the Claims 1 to 3,
**characterised in that**,
the sealing rings (5, 6) have guidance grooves (10) for purposes of seating corresponding projections of the assigned compression ring (11).

5. The ship in accordance with one of the Claims 1 to 4,
**characterised in that**,
each sealing ring (5, 6) is formed from six segments (7).

## Revendications

1. Bateau comprenant une étanchéité de cloison au niveau de passages d'arbres par des bagues d'étanchéité de segments correspondants attribuées parallèlement, pouvant être réglées, qui sont attribués respectivement en pouvant être déplacés par des assemblages par tenons et agissent sur les segments des bagues d'étanchéité par une bague de serrage segmentée réglable pour le déplacement et le positionnement en étoile sur l'arbre et compriment les bagues d'étanchéité sur l'arbre reçu, via des ressorts-bague reçus en tant que ressorts de traction, sachant que les bagues d'étanchéité et les bagues de serrage sont disposées dans un logement relié à une cloison de séparation, **caractérisé en ce que** des dispositifs de réglage (15) agissant radialement par rapport à l'arbre (4) sont attribués aux différents segments (7) des bagues collectrices dans le logement, sachant que chaque dispositif de réglage (15) présente une tige de piston (16) dirigée vers l'extérieur entre les bagues collectrices (5, 6), qui porte un élément entraîneur (17) sur l'extrémité qui se met en prise dans des réceptions (18) attribuées des segments (7) des bagues collectrices (5, 6) pour le levage, et une chambre de pistons (19) avec un piston réglable (20) à l'extrémité de la tige de piston (16) est disposée au-dessus des bagues collectrices (5, 6), et, par un agent comprimé pouvant être commandé, le piston (20) peut être réglé dans une position finale de la chambre de pistons (19) pour lever les segments (7) des bagues collectrices (5, 6) à distance de l'arbre (4) contre la force d'un ressort de pression (21) attribué au-dessus du piston (20) et des ressorts-bague (12) des bagues de serrage (11) et peut être réglé vers le bas par le ressort de pression (21) lorsque le piston (20) n'est pas alimenté en pression, et les ressorts-bague (12) des segments (7) des bagues collectrices (5, 6) peuvent être réglés via la bague de serrage (11) pour venir reposer en étanchéité sur l'arbre (4).

2. Bateau selon la revendication 1, **caractérisé en ce que** la chambre de pistons (19) peut être alimentée en fonctionnement normal par le fluide sous pression amené, par une unité de commande (22) pour désaccoupler le joint en soulevant les bagues collectrices (5, 6) et en cas de perturbations, une activation des bagues collectrices (5, 6) pour étanchéifier par libération de pression de la chambre de pistons (19) peut être réglée automatiquement.

3. Bateau selon la revendication 1 ou 2, **caractérisé en ce que** le fluide sous pression est formé par de l'air comprimé.

4. Bateau selon l'une des revendications 1 à 3, **caractérisé en ce que** les bagues collectrices (5, 6) présentent des rainures de guidage (10) pour recevoir des saillies correspondantes de la bague de serrage (11) attribuée.

5. Bateau selon l'une des revendications 1 à 4, **caractérisé en ce que** chaque bague collectrice (5, 6) est formée de six segments (7).
